# EUROPÄISCHE PATENTANMELDUNG

(11) **EP 4 458 738 A1**
(43) Veröffentlichungstag der Anmeldung: **06.11.2024**
(21) Anmeldenummer: 23171838.8
(22) Anmeldetag: 05.05.2023
(51) Int. Cl.: B65G 43/08, B65G 47/248

(54) **KIPPVORRICHTUNG UND VERFAHREN ZUM KIPPEN VON PAKETEN**

(71) Anmelder: KNAPP Systemintegration GmbH, 8700 Leoben (AT)
(72) Erfinder: Kainersdorfer, Günther, 8010 Graz (AT); Riedner, Franz-Alois, 8741 Weisskirchen (AT)
(74) Vertreter: Wirnsberger & Lerchbaum Patentanwälte OG

(57) **Zusammenfassung**

Die Erfindung betrifft Kippvorrichtung (1) für ein Fördersystem, insbesondere ein Fördersystem einer Kommissionieranlage, welches Fördersystem einen Fördereinlass (13) und einen Förderauslass (16) aufweist, wobei Pakete (P) vom Fördereinlass (13) zum Förderauslass (16) förderbar und zwischen Fördereinlass (13) und Förderauslass (16) kippbar sind. Erfindungsgemäß ist vorgesehen, dass die Kippvorrichtung (1) einen Einlass (E) und zumindest einen Auslass (A) aufweist, wobei ein erster Schenkel (2), welcher mit dem Einlass (E) und dem Auslass (A) verbunden ist, und ein zweiter Schenkel (3), welcher mit dem Auslass (A) verbunden ist, vorgesehen sind und die Schenkel (2, 3) unabhängig voneinander betätigbare Förderantriebe (4, 5), mit welchen ein oder mehrere Pakete (P) entlang einer Förderrichtung (F) förderbar ist, und unabhängig voneinander betätigbare Kippantriebe (8, 9) aufweisen, über welche die Schenkel (2, 3) um zumindest eine Schwenkachse (12) schwenkbar sind, wobei die zumindest eine Schwenkachse (15) bevorzugt im Wesentlichen parallel zur Förderrichtung (F) orientiert ist, sodass ein über den Einlass (E) auf die Kippvorrichtung (1) gefördertes Paket (P) abhängig von dessen Orientierung entweder ohne Orientierungsänderung von einem ersten Förderantrieb (4) des ersten Schenkels (2) über den Auslass (A) ausförderbar oder durch Betätigen der Kippantriebe (8, 9) vom ersten Schenkel (2) auf den zweiten Schenkel (3) kippbar ist, wonach das Paket (P) mit geänderter Orientierung von einem zweiten Förderantrieb (5) des zweiten Schenkels (3) entlang der Förderrichtung (F) über den Auslass (A) ausförderbar ist.

Weiter betrifft die Erfindung ein Verfahren zum Kippen von einem oder mehreren Paketen (P).

## Beschreibung

Die Erfindung betrifft eine Kippvorrichtung für ein Fördersystem, insbesondere ein Fördersystem einer Kommissionieranlage, welches Fördersystem einen Fördereinlass und einen Förderauslass aufweist, wobei Pakete vom Fördereinlass zum Förderauslass förderbar und zwischen Fördereinlass und Förderauslass kippbar sind.

Weiter betrifft die Erfindung ein Verfahren zum Kippen von einem oder mehreren Paketen, insbesondere in einem Fördersystem, bei welchem Fördersystem eine Orientierung der Pakete ermittelt und das Paket über einen Einlass in eine Kippvorrichtung eingefördert wird.

Aus der WO 2018/153717 A2 ist bekannt, dass bei Fördersystemen zum Kommissionieren von Paketen eine Orientierungsstrecke vorgesehen sein kann, auf welcher die Pakete über Aktuatoren und/oder Manipulatoren orientiert werden, um beim Kommissionieren eine möglichst hohe Packdichte zu erreichen.

Ferner geht aus dem Stand der Technik hervor, dass in Fördersystemen auch Kippvorrichtungen zum Orientieren der Pakete einsetzbar sind, um diese mit hoher Packdichte kommissionieren zu können. Eine solche Kippvorrichtung ist beispielsweise aus der US 2022/0112037 A1 bekannt. Hierbei werden Pakete abhängig von deren Orientierung zur Kippvorrichtung befördert und neu orientiert. Allerdings macht diese Kippvorrichtung nicht nur ein Ermitteln einer Orientierung und einer Größe der Pakete, sondern auch ein Aussortieren der zu orientierenden Pakete erforderlich. Üblicherweise findet sowohl das Aussortieren der zu orientierenden Pakete als auch ein Einfördern der Pakete in die Kippvorrichtung über einen Roboterarm statt. Dieser legt die zu orientierenden Pakete auf einem Bereich der Kippvorrichtung ab, ehe die Kippvorrichtungen das Paket kippt und entsprechend neu orientiert. Ein Ausfördern des orientierten Paketes kann entweder direkt über die Kippvorrichtung oder den Roboterarm erfolgen. Folglich ergibt sich bei Fördersystemen mit derartigen Kippvorrichtungen der Nachteil, dass diese konstruktiv aufwendig gestaltet sein müssen, um Pakete orientierungsabhängig kippen zu können. Zudem ergibt sich bei derartigen Kippvorrichtungen ein hoher Zeitaufwand und damit einhergehend eine geringe Effizienz.

Die Aufgabe der Erfindung ist folglich darin zu sehen, eine Kippvorrichtung der eingangs genannten Art anzugeben, mit welcher ein Paket abhängig von dessen Orientierung auf effiziente Weise förderbar und kippbar ist.

Ferner ist es Aufgabe der Erfindung, ein Verfahren der eingangs genannten Art anzugeben, mit welchem Pakete auf einfache und effiziente Weise platzsparend kommissionierbar sind.

Die erste Aufgabe wird erfindungsgemäß dadurch gelöst, dass bei der Kippvorrichtung der eingangs genannten Art vorgesehen ist, dass die Kippvorrichtung einen Einlass und zumindest einen Auslass aufweist, wobei ein erster Schenkel, welcher mit dem Einlass und dem Auslass verbunden ist, und ein zweiter Schenkel, welcher mit dem Auslass verbunden ist, vorgesehen sind und die Schenkel unabhängig voneinander betätigbare Förderantriebe, mit welchen ein oder mehrere Pakete entlang einer Förderrichtung förderbar ist, und unabhängig voneinander betätigbare Kippantriebe aufweisen, über welche die Schenkel um zumindest eine Schwenkachse schwenkbar sind, wobei die zumindest eine Schwenkachse bevorzugt im Wesentlichen parallel zur Förderrichtung orientiert ist, sodass ein über den Einlass auf die Kippvorrichtung gefördertes Paket abhängig von dessen Orientierung entweder ohne Orientierungsänderung von einem ersten Förderantrieb des ersten Schenkels über den Auslass ausförderbar oder durch Betätigen der Kippantriebe vom ersten Schenkel auf den zweiten Schenkel kippbar ist, wonach das Paket mit geänderter Orientierung von einem zweiten Förderantrieb des zweiten Schenkels entlang der Förderrichtung über den Auslass ausförderbar ist. Hierdurch können Pakete unabhängig von deren Orientierung über den Einlass in die Kippvorrichtung eingefördert werden. Da nur der erste Schenkel mit dem Einlass in Verbindung steht, wird das Paket bei bzw. nach einem Einfördern in die Kippvorrichtung von diesem aufgenommen, wobei das Paket vorzugsweise mit einer ersten Fläche auf dem ersten Förderantrieb aufliegt. Abhängig von der Orientierung des Paketes, ist dieses entweder durch Betätigen des ersten Förderantriebes entlang der Förderrichtung zum Auslass förderbar oder durch Schwenken der beiden Schenkel kippbar. Dabei ist es unerheblich, ob zunächst der zweite Schenkel und anschließend der erste Schenkel oder die beiden Schenkel gemeinsam um die Schwenkachse geschwenkt werden. Nach dem Kippen liegt das Paket mit geänderter Orientierung, also bevorzugt mit einer zweiten Fläche, auf dem zweiten Schenkel auf und ist durch den zweiten Förderantrieb entlang der Förderrichtung über den Auslass ausförderbar. Dabei werden als Fördereinrichtungen jegliche Einrichtungen angesehen, mit denen ein Fördern von Paketen, die auf den Schenkeln liegen, entlang der Förderrichtung ermöglicht ist.

Zum Kippen des Paketes sind die beiden Schenkel an zumindest einer Schwenkachse gelagert, wobei für jeden der beiden Schenkel eine eigene Schwenkachse vorgesehen sein kann.

Bevorzugt ergibt sich sowohl beim Einfördern des Paketes, gegebenenfalls durch Betätigen des ersten Förderantriebes, als auch beim Ausfördern des Paketes, durch Betätigen des ersten und/oder zweiten Förderantriebes, eine horizontal orientierte Förderrichtung. Abhängig von einer Schwenkbewegung der Schenkel ist es auch denkbar, dass beim Ausfördern des Paketes entlang der Förderrichtung beide Schenkel horizontal zur Förderrichtung ausgerichtet sind, sodass vom ersten Schenkel bereits ein neues Paket aufnehmbar ist. Hierdurch ergibt sich eine besonders hohe Effizienz der Kippvorrichtung.

Es ist zweckmäßig, wenn der erste und der zweite Schenkel in einer Draufsicht eine Länge sowie eine Breite von jeweils 0,3 m bis 4 m aufweisen. Für gewöhnlich stehen Länge und Breite rechtwinklig aufeinander, sodass diese eine Ebene aufspannen. Bevorzugt weisen der erste und der zweite Schenkel die gleiche Länge auf, wodurch eine Kippvorrichtung besonders universell einsetzbar ist, insbesondere in unterschiedlichsten Fördersystemen. Meist sind die Schenkel mit gleicher Breite ausgebildet, im Einzelfall können diese aber auch mit unterschiedlicher Breite ausgebildet sein. Üblicherweise sind Pakete über die Förderantriebe entlang einer Längsachse der Schenkel förderbar, sodass Längsachse und Förderrichtung in bevorzugter Weise also miteinander koinzidieren.

Die beiden Schenkel können endseitig eine vorzugsweise als Platte ausgebildete Begrenzung aufweisen, um ein Herabfallen des Paketes vom Schenkel zu verhindern.

Vorzugsweise ist vorgesehen, dass der erste Förderantrieb und/oder der zweite Förderantrieb als Rollen- und/oder Bandförderer, insbesondere mit einem Modulband, ausgebildet ist. Dadurch sind Pakete auf gleichermaßen einfache, schnelle und schonende Weise in die Kippvorrichtung ein- und aus dieser ausförderbar. Bei einer Ausführung als Rollenförderer kann es von Vorteil sein, wenn nur ein Teil der Rollen antreibbar und die übrigen Rollen passiv ausgeführt sind.

Wenngleich für jeden der beiden Schenkel eine eigene Schwenkachse vorgesehen sein kann, um die beiden Schenkel unabhängig voneinander schwenken und das Kippen des Paketes durchführen zu können, so ist es doch bevorzugt, wenn der erste Schenkel und der zweite Schenkel an einer gemeinsamen, horizontalen Schwenkachse angeordnet sind. Daraus ergibt sich nämlich nicht nur eine konstruktiv besonders einfache, sondern auch eine besonders wartungsarme Kippvorrichtung. In einer Draufsicht auf die Kippvorrichtung ist die Schwenkachse bevorzugt zwischen den beiden Schenkeln angeordnet und erstreckt sich entlang deren Längsachsen in horizontaler Richtung. Bevorzugt verläuft die Schwenkachse also parallel zur Förderrichtung.

Mit Vorzug weist jeder der Schenkel zum Betätigen der Förderantriebe zumindest einen Motor mit einem Getriebe und einem Verbindungsmittel, insbesondere einen Getriebemotor mit Gurtantrieb, auf. Daraus ergeben sich Förderantriebe, mit welchen Pakete besonders schnell und effizient entlang der Förderrichtung förderbar sind. Bei Betätigen des Förderantriebes treibt der Motor über das Getriebe das Verbindungsmittel an, sodass auf dem Schenkel befindliche Pakete, insbesondere zum Auslass der Kippvorrichtung, förderbar sind.

Alternativ oder ergänzend kann auch vorgesehen sein, dass die Förderantriebe als Motorrollen ausgebildet sind, einen Gurt und/oder ein Modulband aufweisen.

Zweckmäßigerweise sind die Kippantriebe als Motor mit Getriebe, insbesondere Servomotor mit Kurbelgetriebe, ausgebildet. Dadurch sind die Schenkel auf konstruktiv einfache und gleichzeitig präzise Weise schwenkbar. Hierbei ist üblicherweise jeder Motor über ein Getriebe mit einem der beiden Schenkel verbunden. Zwischen Getriebe und Schenkel kann auch ein Gestänge vorgesehen sein, um Motor und Getriebe beabstandet zum Schenkel anordnen bzw. befestigen zu können. Bevorzugt kann jeder der Schenkel auch mit einer Trägerkonstruktion versehen sein, die über das Gestänge mit dem Kippantrieb in Verbindung steht und an welcher der Förderantrieb und die Begrenzung angeordnet sind.

In einer bevorzugten Form der Kippvorrichtung sind der erste Schenkel und der zweite Schenkel in einem rechten Winkel zueinander anordenbar, um ein besonders stabiles und effizientes Kippen von Paketen zu ermöglichen.

Die erfindungsgemäße Kippvorrichtung wird vorzugsweise in einem Fördersystem, insbesondere einer Kommissionieranlage, mit einer Einrichtung zum Ermitteln einer Orientierung eines Paketes, insbesondere einer Kamera oder einem Lasersensor, einem Fördereinlass zum Einfördern des Paketes in den Einlass der Kippvorrichtung, über welche das Paket kippbar ist, und einem Förderauslass zum Ausfördern des Paketes vom Auslass der Kippvorrichtung eingesetzt. Dies ermöglicht es, Pakete, deren Orientierung auf der Förderstrecke geändert werden sollte, um beispielsweise eine günstige Kommissionierung mit hoher Packdichte zu erreichen, von Paketen zu unterscheiden, deren Orientierung nicht geändert werden muss, sodass abhängig von der erforderlichen Orientierungsänderung Pakete ohne Änderung durch die Kippvorrichtung gefördert oder die Orientierung der Pakete in der Kippvorrichtung geändert werden kann. Durch ein derartige Orientierungsänderung der Pakete ist neben einer hohe Packdichte auch ein bevorzugtes Packbild erzielbar.

Üblicherweise werden sämtliche Pakete vom Fördereinlass des Fördersystems zum Einlass der Kippvorrichtung gefördert, sodass auf eine gesonderte Beförderung von zu orientierenden Paketen verzichtet werden kann. Entsprechend spielt eine Unterscheidung der im Fördersystem vom Fördereinlass zum Förderauslass geförderten Pakete in zu orientierende Pakete und nicht zu orientierende Pakete zumindest für einen Förderweg und eine Förderdauer der Pakete bloß eine unwesentliche Rolle. Über den Fördereinlass werden Pakete von einer Quelle in das Fördersystem eingespeist. Die Förderung der Pakete vom Fördereinlass zum Einlass der Kippvorrichtung erfolgt üblicherweise über einen ersten Rollenförderer. Zweckmäßigerweise ist die Einrichtung entlang des ersten Rollenförderers oder an bzw. in der Kippvorrichtung angeordnet. Für das Ausfördern von nicht zu orientierenden Paketen und Paketen mit geänderter Orientierung ist zwischen dem Auslass der Kippvorrichtung und dem Förderauslass ein zweiter Rollenförderer angeordnet. Im Übrigen können erster und zweiter Rollenförderer auch zumindest bereichsweise als Bandförderer ausgebildet sein.

Handelt es sich beim Paket um ein zu orientierendes Paket, wird dieses durch Schwenken der beiden Schenkel der Kippvorrichtung gekippt. Anschließend liegt das Paket am zweiten Schenkel der Kippvorrichtung auf und wird vom zweiten Förderantrieb zum Auslass gefördert. In weiterer Folge wird das Paket vom zweiten Rollenförderer über den Förderauslass ausgefördert. Für gewöhnlich unterscheiden sich die Dimensionierungen, insbesondere die Breiten, des ersten und des zweiten Rollenförderers zumindest bereichsweise. Dies ist üblicherweise darauf zurückzuführen, dass der zweite Rollenförderer im Bereich des Auslasses der Kippvorrichtung mit einer größeren Breite ausgebildet sein kann, um Pakete von beiden Schenkeln übernehmen zu können. Alternativ können Pakete mit geänderter Orientierung vom Auslass des zweiten Schenkels über einen gesonderten Rollenförderer zum Förderauslass ausförderbar sein, wobei zweiter und gesonderter Rollenförderer zumindest bereichsweise parallel und/oder zusammen geführt sein können.

Handelt es sich beim Paket um ein nicht zu orientierendes Paket, wird dieses durch Betätigen des ersten Förderantriebes direkt vom ersten Schenkel zum Auslass und anschließend vom zweiten Rollenförderer zum Förderauslass gefördert. Entsprechend ist der erste Schenkel besonders schnell wieder zum Kippen von zu orientierenden Paketen nutzbar.

Die verfahrensmäßige Aufgabe wird erfindungsgemäß durch ein Verfahren der eingangs genannten Art gelöst, bei welchem das Paket zunächst von einem ersten Schenkel der Kippvorrichtung aufgenommen wird, wobei das Paket abhängig von der Orientierung entweder von einem ersten Förderantrieb des ersten Schenkels entlang einer Förderrichtung über einen Auslass ausgefördert oder von der Kippvorrichtung gekippt wird, indem der erste Schenkel und ein zweiter Schenkel der Kippvorrichtung zum Kippen des Paketes um eine Schwenkachse geschwenkt werden, welche bevorzugt im Wesentlichen parallel zur Förderrichtung ist, sodass ein zu orientierendes Paket vom zweiten Schenkel aufgenommen und von einem zweiten Förderantrieb des zweiten Schenkels entlang der Förderrichtung über den Auslass ausgefördert wird.

Üblicherweise wird das Verfahren mit einer erfindungsgemäßen Vorrichtung durchgeführt.

Entsprechend ergibt sich eine besonders effiziente Förderung des Paketes. Zweckmäßigerweise passieren dabei sämtliche Pakete die Kippvorrichtung und werden orientierungsabhängig gekippt, wobei nicht zu orientierende Pakete auf einfache und schnelle Weise vom ersten Schenkel ausgefördert werden können. Hierzu ist der erste Schenkel mit dem ersten Förderantrieb versehen, bei dessen Betätigung das vom Eingang eingeförderte Paket über den Auslass ausgefördert werden kann. Ein Schwenken der Schenkel ist hierzu nicht erforderlich.

Handelt es sich hingegen um ein zu orientierendes Paket, welches gekippt werden soll, ist das Schwenken der beiden Schenkel der Kippvorrichtung unerlässlich. Dabei wird das Paket über den Einlass in die Kippvorrichtung eingefördert und vom ersten Schenkel aufgenommen, ehe das Paket durch das Schwenken der beiden Schenkel um die Schwenkachse, welche bevorzugt parallel zur Förderrichtung ist, gekippt und vom zweiten Schenkel aufgenommen wird. Anschließend wird das Paket mit geänderter Orientierung durch Betätigen des zweiten Förderantriebes über den Auslass ausgefördert.

Vorzugsweise wird das Paket in einer Ausgangsposition vom ersten Schenkel aufgenommen und die beiden Schenkel zum Kippen des Paketes gemeinsam von der Ausgangsposition in eine Endposition geschwenkt. Dadurch ergibt sich ein besonders effizientes Kippen des Paketes.

Durch die unabhängige Schwenkbarkeit der beiden Schenkel sind sowohl Ausgangsposition als auch Endposition weitestgehend frei festlegbar und damit einfach auf eine Dimensionierung der Pakete oder ein Einsatzgebiet anpassbar. Zweckmäßigerweise ist der erste Schenkel in der Ausgangsposition so angeordnet, dass sich eine im Wesentlichen horizontale Förderrichtung ergibt, wodurch das Paket auf besonders einfache Weise aufgenommen werden kann. Ebenso kann sich durch die Endposition des zweiten Schenkels eine horizontale Förderrichtung ergeben, wodurch das Ausfördern des Paketes mit geänderter Orientierung vereinfacht wird.

Üblicherweise wird der Winkel zwischen dem ersten Schenkel und dem zweiten Schenkel während des Schwenkens von der Ausgangsposition in die Endposition beibehalten, wobei der Winkel in der Ausgangsposition vorzugsweise 90° beträgt. Durch die unabhängige Schwenkbarkeit der beiden Schenkel ist es allerdings auch möglich, dass das Schwenken der beiden Schenkel zwar gemeinsam beginnt, der erste Schenkel aber bereits nach einer Schwenkbewegung von weniger als 90° die Endposition erreicht.

Prinzipiell wäre es auch möglich, dass die beiden Schenkel gemeinsam in die Ausgangsposition zurückgeschwenkt werden.

Allerdings hat es sich bewährt, wenn zunächst der erste Schenkel und anschließend der zweite Schenkel von der Endposition in die Ausgangsposition zurückgeschwenkt wird. Auf diese Weise kann der erste Schenkel schneller in die Ausgangsposition gelangen und ein neues Paket aufgenommen werden. Besonders vorteilhaft ist ein derartiges Zurückschwenken der Schenkel, wenn der Winkel zwischen den beiden Schenkeln in der Endposition größer als 90° ist, der erste Schenkel also von der Ausgangsposition in die Endposition um einen Winkel von weniger als 90° geschwenkt wird.

Eine verbesserte Effizienz des Verfahrens ergibt sich insbesondere dann, wenn der erste Schenkel noch vor dem Ausfördern des Paketes mit geänderter Orientierung in die Ausgangsposition zurückgeschwenkt wird. Dadurch kann der erste Schenkel in der Ausgangsposition zwischenzeitlich zumindest ein neues Paket aufnehmen bzw. über den ersten Förderantrieb ausfördern, während der zweite Förderantrieb betätigt wird, um das Paket mit geänderter Orientierung entlang der Förderrichtung über den Auslass aus der Kippvorrichtung auszufördern. Vorzugsweise wird der zweite Schenkel direkt nach dem Ausfördern des Paketes in die Ausgangsposition zurückgeschwenkt. Sobald dieser die Ausgangsposition erreicht, kann, sofern zwischenzeitlich vom ersten Förderantrieb ein zu orientierendes Paket aufgenommen wurde, bereits das nächste Paket gekippt werden.

Mit Vorteil wird der zweite Schenkel von der Ausgangsposition in die Endposition um 90° geschwenkt. Dadurch liegen vom ersten Schenkel aufgenommene zu orientierende Pakete nicht nur besonders früh auch am zweiten Schenkel an und können auf besonders schonende Weise gekippt werden, sondern diese können auch besonders schnell vom zweiten Förderantrieb ausgefördert werden.

Vorzugsweise wird der erste Schenkel von der Ausgangsposition in die Endposition um weniger als 90°, aber mehr als 45°, geschwenkt. Somit kann der erste Schenkel besonders schnell in die Ausgangsposition zurückgeschwenkt werden, um zumindest ein neues Paket aufzunehmen. Günstig ist es, wenn der erste Schenkel um mehr als 45° geschwenkt wird, um sämtliche Pakete unabhängig von deren Schwerpunkten sicher kippen zu können.

Üblicherweise wird das Paket mit geänderter Orientierung in der Endposition vom zweiten Förderantrieb ausgefördert. Dies bietet den Vorteil, dass der erste Schenkel zwischenzeitlich bereits in die Ausgangsposition zurückgeschwenkt werden kann, wodurch sich eine besonders hohe Effizienz des Verfahrens ergibt.

Bevorzugt werden der erste Schenkel und der zweite Schenkel unabhängig voneinander um dieselbe Schwenkachse geschwenkt. Dies erlaubt auf konstruktiv einfache Weise ein präzises Schwenken der beiden Schenkel.

Weitere Merkmale, Vorteile und Wirkungen Erfindung ergeben sich aus den nachfolgend dargestellten Ausführungsbeispielen. In den Zeichnungen, auf welche dabei Bezug genommen wird, zeigen:
Fig. 1 eine Frontansicht eines Ausführungsbeispiels einer Kippvorrichtung;
Fig. 2 eine Draufsicht auf die Kippvorrichtung der Fig. 1 mit geschwenkten Schenkeln;
Fig. 3a bis f Frontansichten der Kippvorrichtung der Fig. 1 mit unterschiedlich geschwenkten Schenkeln;
Fig. 4 eine perspektivische Ansicht der Kippvorrichtung in einem Fördersystem;
Fig. 5 eine perspektivische Ansicht der Kippvorrichtung der Fig. 3 in einer Ausgangsposition;
Fig. 6 eine perspektivische Ansicht der Kippvorrichtung der Fig. 3 beim Schwenken in eine Endposition;
Fig. 7 eine perspektivische Ansicht der Kippvorrichtung der Fig. 3 in der Endposition;
Fig. 8 eine perspektivische Ansicht der Kippvorrichtung der Fig. 3 beim Schwenken in die Ausgangsposition.

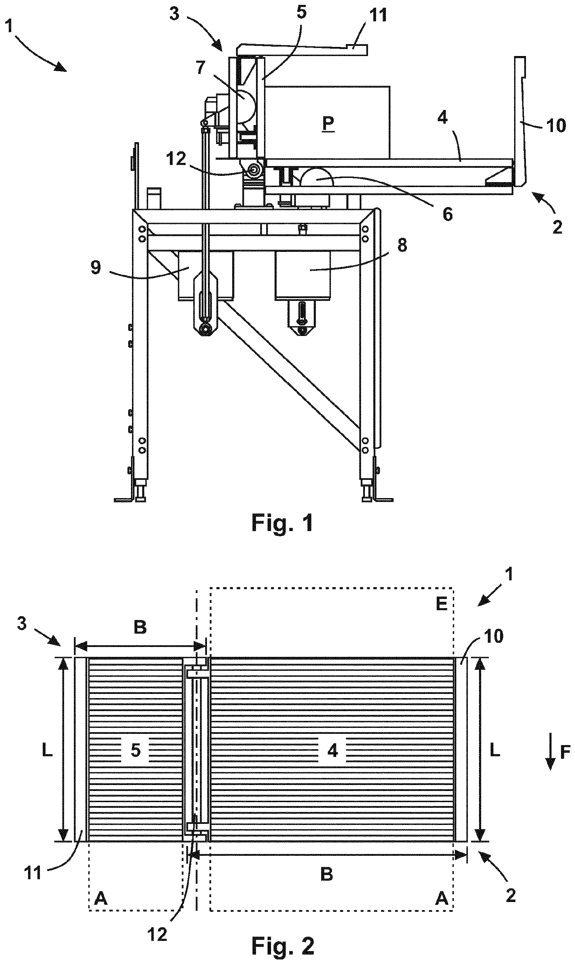

Das in Fig. 1 dargestellte Ausführungsbeispiel einer Kippvorrichtung 1 weist zwei Schenkel 2, 3 auf und ist in einer Frontansicht mit Blickrichtung entlang einer Förderrichtung F dargestellt. Die gezeigten Schenkel 2, 3 weisen beide jeweils einen Förderantrieb 4 ,5 zum Fördern von Paketen P auf, welche in diesem Ausführungsbeispiel als Rollenförderer ausgebildet sind. Zum Betätigen der Förderantriebe 4 ,5 weisen diese jeweils einen Motor mit Getriebe, konkret einen Getriebemotor 6, 7 mit Gurtantrieb, auf. Darüber hinaus sind beide Schenkel 2, 3 mit jeweils einem Kippantrieb 8, 9 verbunden, welche in diesem Fall als Servomotoren mit Kurbelgetriebe ausgebildet und über jeweils ein Gestänge mit einem der Schenkel 2, 3 verbunden sind, wodurch die Schenkel 2, 3 unabhängig voneinander schwenkbar sind. Ferner weisen beide Schenkel 2, 3 an äußeren Enden jeweils eine als Platte ausgebildete Begrenzung 10, 11 auf, durch welche ein Herabfallen des Paketes P von den Schenkeln 2, 3 verhindert ist.

Aus der Draufsicht der Fig. 2, in welcher eine Stellung der Schenkel 2, 3 von jener der Fig. 1 abweicht, geht hervor, dass die Schenkel 2, 3 der gezeigten Kippvorrichtung 1 unterschiedliche Breiten B aber eine gleiche Längen L aufweisen, wobei der zweite Schenkel 3 mit einer geringeren Breite B als der erste Schenkel 2 ausgebildet ist. Über gestrichelte Linien sind in dieser Darstellung auch ein Einlass E, über welchen Pakete P auf den ersten Schenkel 2 förderbar sind, und Auslässe A, über welche Pakete P durch Betätigen der Förderantriebe 4 ,5 ausförderbar sind, angedeutet. Zudem ist die Förderrichtung F in Form eines Pfeiles dargestellt, welche im konkreten Ausführungsbeispiel eine geradlinige, horizontale Verbindung zwischen Einlass E und Auslass A darstellt. Im Übrigen ist auch die theoretische Schwenkachse, welche zentral durch eine Schwenkachse 12 und parallel zur Förderrichtung F verläuft, als unterbrochene Linie eingezeichnet.

Zudem wird aus der Draufsicht der Fig. 2 in Kombination mit der Frontansicht der Fig. 1 besonders deutlich, dass ein erster Schenkel 2 zum Aufnehmen des Paketes P parallel zur im Wesentlichen horizontalen Förderrichtung F angeordnet ist. Dabei wird das Paket P entlang der Förderrichtung F über den Einlass E in die Kippvorrichtung 1 eingefördert, wobei der Einlass E mit dem ersten Schenkel 2 verbunden ist, sodass das Paket P vom ersten Schenkel 2 und hier vom ersten Förderantrieb 4 aufgenommen werden kann. Handelt es sich beim Paket P um ein nicht zu orientierendes Paket, wird der erste Förderantrieb 4 betätigt und das Paket P in Förderrichtung F direkt zum Auslass A der Kippvorrichtung 1 gefördert, welcher ebenfalls mit dem ersten Schenkel 2 der Kippvorrichtung 1 verbunden ist. Dementsprechend wird das Paket P entlang der Förderrichtung F gefördert, und durchläuft die Kippvorrichtung 1 ohne gekippt zu werden. Ein zu orientierendes Paket P wird hingegen vom ersten Schenkel 2 aufgenommen und durch Schwenken beider Schenkel 2, 3 um eine horizontale Schwenkachse 12 gekippt. Dies wird durch ein entsprechendes Betätigen der Kippantriebe 8, 9 erzielt. Durch eine Formgebung des Paketes P wird dieses von einer ersten Fläche auf eine angrenzende zweite Fläche gekippt.

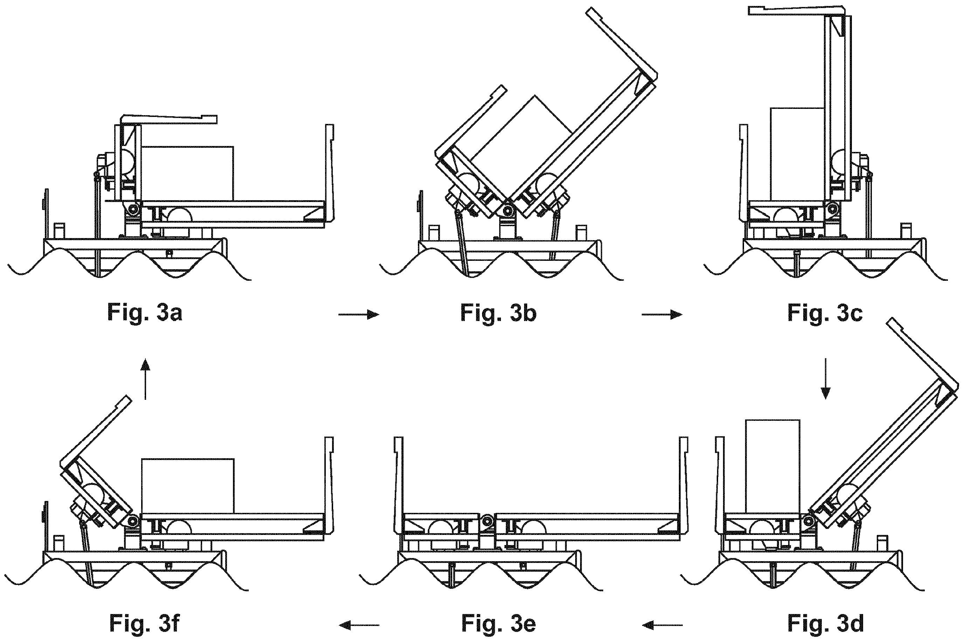

Zum Kippen des Paketes P hat sich eine in Fig. 1 gezeigte Ausgangsposition bewährt, bei welcher die beiden Schenkel 2, 3 im rechten Winkel aufeinander stehen. Zudem werden die beiden Schenkel 2, 3 bevorzugt um eine gemeinsame, horizontale Schwenkachse 12 geschwenkt werden, welche wie aus Fig. 2 ersichtlich zwischen den beiden Schenkeln 2, 3 angeordnet ist. Ein bevorzugter Ablauf des Kippens mit der Kippvorrichtung 1 dieses Ausführungsbeispiels ist in den Fig. 3a bis f gezeigt und wird nachstehend genauer erläutert.

In den Fig. 3a bis f sind unterschiedliche Stadien des Kippens anhand des Ausführungsbeispiels der Kippvorrichtung 1 der Fig. 1 gezeigt. Fig. 3a zeigt die bereits in Fig. 1 dargestellte Ausgangsposition der Kippvorrichtung 1, bei welcher der erste Schenkel 2 und der zweite Schenkel 3 im rechten Winkel aufeinander stehen, das Paket P bereits vom Einlass E entlang der Förderrichtung F in die Kippvorrichtung 1 eingefördert und vom ersten Schenkel 2 bzw. Förderantrieb 4 aufgenommen wurde. Durch den Winkel der beiden Schenkel 2, 3 zueinander und der Formgebung des Paketes P, liegt dieses mit einer ersten Fläche auf dem ersten Förderantrieb 4 auf und gleichzeitig bereits mit einer zweiten Fläche am zweiten Schenkel 3 bzw. Förderantrieb 5 an. Ein flächiger Kontakt mit den Schenkeln 2, 3 bzw. Förderantrieben 4, 5 kann abhängig von der Formgebung des Paketes P aber auch entfallen. In Fig. 3b ist eine erste Zwischenposition gezeigt, in welcher die beiden Schenkel 2, 3 durch Betätigen der Kippantriebe 8, 9 zum Kippen des Paketes P zunächst gemeinsam geschwenkt und um 45° von der Ausgangsposition ausgelenkt sind. Dabei liegen beide Flächen des Paketes P auf den Förderantrieben 4, 5 beider Schenkel 2, 3 auf. Durch weiteres gemeinsames Schwenken der Schenkel 2, 3 wird eine in Fig. 3c gezeigte Endposition erreicht. In der Endposition ist der zweite Schenkel 3 horizontal angeordnet, wodurch das Paket P über dessen zweiten Fläche mit geänderter Orientierung vom zweiten Schenkel 3 aufgenommen und durch Betätigen des zweiten Förderantriebes 5 in Förderrichtung F ausgefördert wird. Dementsprechend ist nicht nur der erste Schenkel 2, sondern auch der zweite Schenkel 3 mit dem Auslass A verbunden. Dieses Ausfördern erfolgt während der in Fig. 3c bis 3e gezeigten Stadien des Kippens, wobei der erste Schenkel 2 bereits zwischen Fig. 3c und 3d unabhängig vom zweiten Schenkel 3 in die Ausgangsposition zurückgeschwenkt wird. Besonders eindeutig ist dieses Zurückschwenken in der Fig. 3d erkennbar, in welcher der erste Schenkel 2 bereits um 45° von dessen Endposition ausgelenkt ist.

In der Fig. 3e ist der erste Schenkel 2 bereits vollständig in der Ausgangsposition angelangt und horizontal angeordnet, sodass dieser bereits ein neues Paket P aufnehmen und, sollte es sich um ein nicht zu orientierendes Paket handeln, durch Betätigen des ersten Förderantriebes 4 direkt in Förderrichtung F über den Auslass A ausfördern kann. Handelt es sich jedoch um ein zu orientierendes Paket P, wird dieses lediglich vom ersten Schenkel 2 bzw. Förderantrieb 4 aufgenommen. In diesem Stadium des Kippens sind die Dimensionen der Schenkel 2, 3 sowie die Orientierung der Schwenkachse 12 besonders einfach erkennbar, wie auch in der Fig. 2 illustriert.

Wie in der Fig. 3f gezeigt, wird nach Betätigen des zweiten Förderantriebes 5 und dem Ausfördern des Paketes P mit geänderter Orientierung auch der zweite Schenkel 3 in die Ausgangsposition zurückgeschwenkt. In dieser Darstellung ist der zweite Schenkel 3 bereits zur Hälfte in die Ausgangsposition zurückgeschwenkt, was einer Auslenkung von 45° aus der horizontalen Endposition des zweiten Schenkels 3 entspricht. Spätestens wenn der zweite Schenkel 3 die Ausgangsposition erreicht, kann das vom ersten Schenkel 2 bzw. Förderantrieb 4 aufgenommene Paket P gekippt werden, wie in Fig. 3a zu sehen ist. Anschließend werden die Stadien des Kippens der Fig. 3a bis f erneut durchlaufen, um auch das neue Paket P kippen zu können.

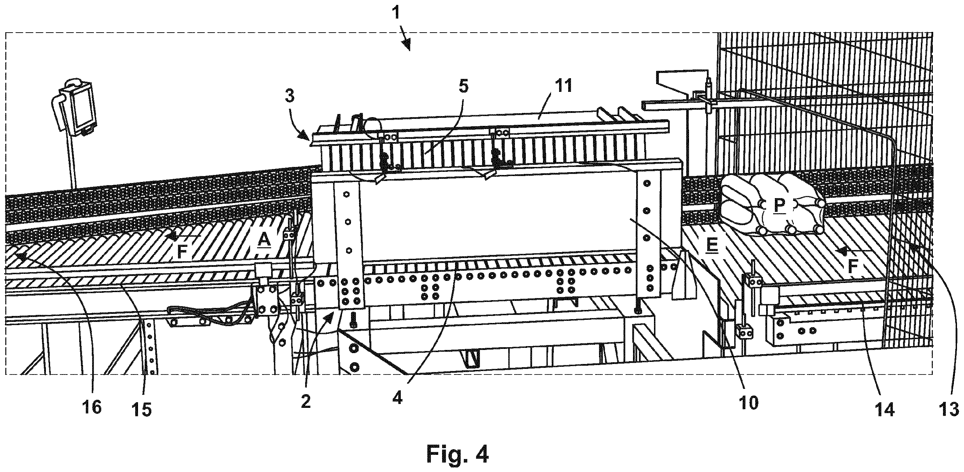

Fig. 4 stellt eine perspektivische Ansicht einer in ein Fördersystem eingebundenen Kippvorrichtung 1 dar. Dabei wird ein als Getränkepackung dargestelltes Paket P von einem Fördereinlass 13 über einen ersten Rollenförderer 14 zum Einlass E der Kippvorrichtung 1 gefördert. Die Kippvorrichtung 1 ist im Wesentlichen analog zum Ausführungsbeispiel der Kippvorrichtung 1 der Fig. 1 ausgebildet.

Üblicherweise ist die Orientierung des Paketes P auf dem ersten Rollenförderer 14 bereits bekannt oder wird über eine entlang des ersten Rollenförderers 14 angeordnete Einrichtung mit einem optischen Sensor, insbesondere einer Kamera oder einem Lasersensor, ermittelt. Alternativ kann die Einrichtung auch an der Kippvorrichtung 1 angeordnet sein.

Zu orientierende Pakete P, die über den Einlass E in die Kippvorrichtung 1 eingefördert und vom ersten Schenkel 2 bzw. Förderantrieb 4 aufgenommen werden, werden wie vorstehend beschrieben gekippt und durch Betätigen des zweiten Förderantriebes 5 über den Auslass A der Kippvorrichtung 1 ausgefördert. Dabei wird das Paket P mit geänderter Orientierung von einem zweiten Rollenförderer 15 aufgenommen und von diesem zu einem Förderauslass 16 gefördert. Ähnlich den Begrenzungen 10, 11 der beiden Schenkel 2, 3, weisen auch der erste Rollenförderer 14 und der zweite Rollenförderer 15 des Fördersystems Anschläge auf, durch welche eine Orientierung der entlang der Förderrichtung F zu fördernden Pakete P weitestgehend beibehalten und das Herabfallen der Pakete P von den Rollenförderern 14, 15 verhindert werden kann. Ferner weist der zweite Rollenförderer 15 eine größere Breite als der erste Rollenförderer 14 auf, um sämtliche Pakete P vom Auslass A der Kippvorrichtung 1, also sowohl vom zweiten Schenkel 3 ausgeförderte Pakete P mit geänderter Orientierung als auch vom ersten Schenkel 2 ausgeförderte nicht zu orientierende Pakete P, aufnehmen zu können.

Durch das Kippen von zu orientierenden Paketen P und das direkte Ausfördern von nicht zu orientierenden Paketen P aus der Kippvorrichtung 1 ist sichergestellt, dass sämtliche Pakete P entsprechend orientiert sind, um bei einer Kommissionierung der Pakete P ein bevorzugtes Packbild und eine besonders hohe Packdichte erzielen zu können.

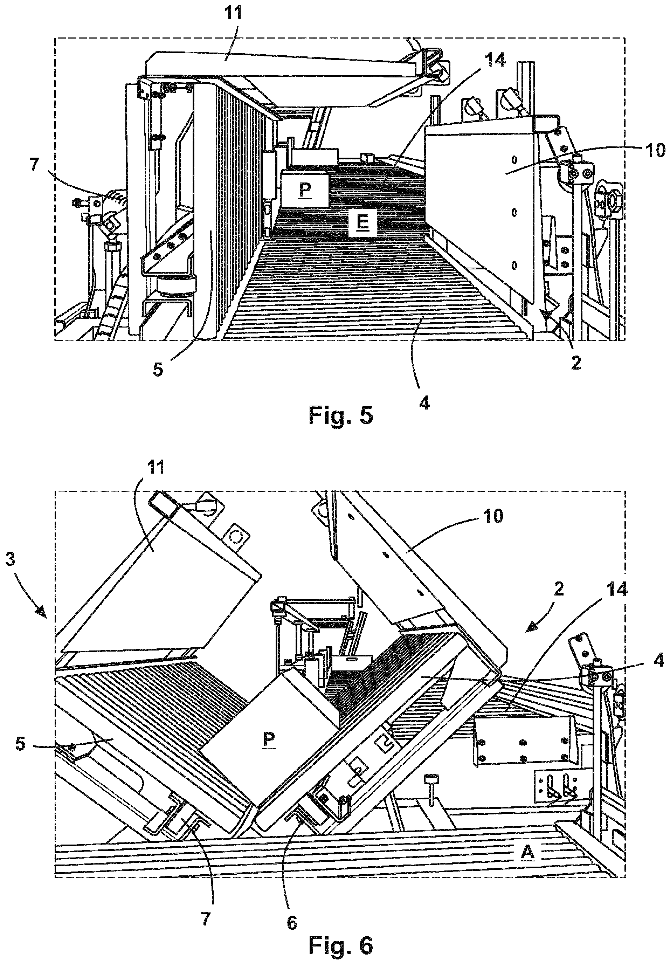

In Fig. 5 ist die in das Fördersystem eingebundene Kippvorrichtung 1 aus Sicht des Auslasses A dargestellt. Dabei sind die Schenkel 2, 3 der Kippvorrichtung 1 in der zuvor beschriebenen Ausgangsposition angeordnet und deren Dimensionierung gut erkennbar. Ferner ist auf dem ersten Rollenförderer 14 das Paket P ersichtlich, welches vom Fördereinlass 13 zum Einlass E der Kippvorrichtung 1 gefördert und am Anschlag anliegt. Der erste Rollenförderer 14 geht nahtlos in den ersten Schenkel 2 der Kippvorrichtung 1 über, sodass das Paket P besonders einfach vom ersten Schenkel 2 aufgenommen werden kann.

Die Fig. 6 zeigt die in das Fördersystem eingebundene Kippvorrichtung 1 aus derselben Perspektive. Im Unterschied zur Fig. 5 sind die Schenkel 2, 3 gemeinsam um ca. 45° zur Ausgangsposition geschwenkt, sodass im Wesentlichen das in der Fig. 3b gezeigte Stadium des Kippens dargestellt ist. Hier sind die Getriebemotoren 6, 7, insbesondere deren Gurtantriebe, Förderantriebe 4, 5 erkennbar. Ebenso kann der Auslass A der Kippvorrichtung 1 und ein Teil des zweiten Rollenförderers 15 erkannt werden, über welchen das Paket P mit geänderter Orientierung aus der Kippvorrichtung 1 ausförderbar und zum Förderauslass 16 förderbar ist.

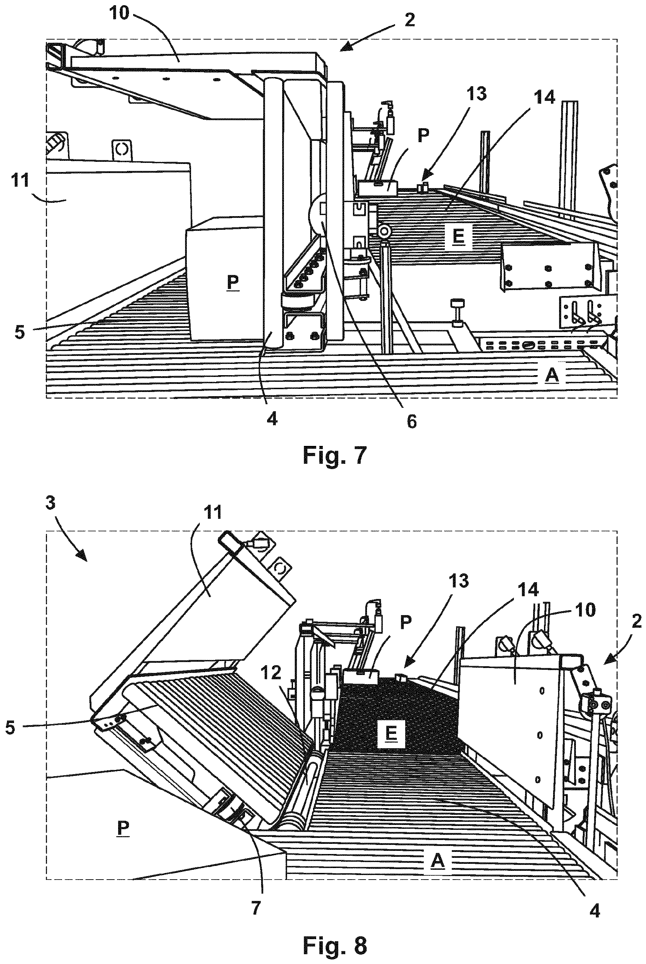

In Fig. 7 zeigt die Kippvorrichtung 1 in derselben Perspektive in der Endposition. Dabei ist das Paket P mit geänderter Orientierung vom zweiten Schenkel 3 bzw. Förderantrieb 5 aufgenommen, liegt aber noch am ersten Schenkel 2 bzw. Förderantrieb 4 an. Die dargestellte Endposition korrespondiert mit der in Fig. 3c gezeigten Endposition der Kippvorrichtung 1. Dabei ist das Kippen abgeschlossen und das Paket P mit geänderter Orientierung kann durch Betätigen des zweiten Förderantriebes 5 über den Auslass A ausgefördert werden. Anschließend wird das Paket P mit geänderter Orientierung vom zweiten Rollenförderer 15 zum Förderauslass 16 gefördert. Ein neues Paket P wird bereits auf dem ersten Rollenförderer 14 zum Einlass E gefördert.

In Fig. 8 ist die Kippvorrichtung 1 in derselben Perspektive gezeigt, wobei der erste Schenkel 2 bereits vollständig in die Ausgangsposition zurückgeschwenkt ist. Bei der gezeigten Kippvorrichtung 1 wird, wie auch in den Fig. 3a bis f dargestellt, zunächst der erste Schenkel 2 und erst nach Ausfördern des Paketes P mit geänderter Orientierung der zweite Schenkel 3 in die Ausgangsposition zurückgeschwenkt. Hierbei ist die Schwenkachse 12 erkennbar, an welcher die Schenkel 2, 3 angeordnet sind. Das Zurückschwenken des zweiten Schenkels 3 ist im konkreten Fall noch nicht abgeschlossen, sondern dieser ist um ca. 45° von der Endposition ausgeschwenkt. Dies entspricht weitestgehend der Anordnung der Schenkel 2, 3, wie sie in Fig. 3f gezeigt ist.

Das Paket P mit geänderter Orientierung wurde bereits durch Betätigen des zweiten Förderantriebes 5 über den Auslass A der Kippvorrichtung 1 ausgefördert und wird auf dem zweiten Rollenförderer 15 in Richtung des Förderauslasses 16 gefördert. Gesetzt den Fall, dass ein nicht zu orientierendes Paket P über den ersten Rollenförderer 14 in den Einlass E der Kippvorrichtung 1 gefördert wird und zum ersten Schenkel 2 gelangt, könnte dieses noch durch Betätigen des ersten Förderantriebes 4 über den Auslass A der Kippvorrichtung 1 ausgefördert werden, ehe der zweite Schenkel 3 die Ausgangsposition erreicht. Entsprechend wäre auch dieses nicht zu orientierende Paket P direkt zum zweiten Rollenförderer 15 und weiter zum Förderauslass 16 förderbar.

Mit der erfindungsgemäßen Kippvorrichtung 1 können Pakete P abhängig von deren Orientierung um eine horizontal und im Wesentlichen parallel zu einer Förderrichtung F orientierte Achse gekippt werden, sodass sich bei der Kommissionierung der Pakete P eine besonders hohe Packdichte erzielen lässt.

## Patentansprüche

1. Kippvorrichtung (1) für ein Fördersystem, insbesondere ein Fördersystem einer Kommissionieranlage, welches Fördersystem einen Fördereinlass (13) und einen Förderauslass (16) aufweist, wobei Pakete (P) vom Fördereinlass (13) zum Förderauslass (16) förderbar und zwischen Fördereinlass (13) und Förderauslass (16) kippbar sind, **dadurch gekennzeichnet, dass** die Kippvorrichtung (1) einen Einlass (E) und zumindest einen Auslass (A) aufweist, wobei ein erster Schenkel (2), welcher mit dem Einlass (E) und dem Auslass (A) verbunden ist, und ein zweiter Schenkel (3), welcher mit dem Auslass (A) verbunden ist, vorgesehen sind und die Schenkel (2, 3) unabhängig voneinander betätigbare Förderantriebe (4, 5), mit welchen ein oder mehrere Pakete (P) entlang einer Förderrichtung (F) förderbar ist, und unabhängig voneinander betätigbare Kippantriebe (8, 9) aufweisen, über welche die Schenkel (2, 3) um zumindest eine Schwenkachse (12) schwenkbar sind, wobei die zumindest eine Schwenkachse (12) bevorzugt im Wesentlichen parallel zur Förderrichtung (F) orientiert ist, sodass ein über den Einlass (E) auf die Kippvorrichtung (1) gefördertes Paket (P) abhängig von dessen Orientierung entweder ohne Orientierungsänderung von einem ersten Förderantrieb (4) des ersten Schenkels (2) über den Auslass (A) ausförderbar oder durch Betätigen der Kippantriebe (8, 9) vom ersten Schenkel (2) auf den zweiten Schenkel (3) kippbar ist, wonach das Paket (P) mit geänderter Orientierung von einem zweiten Förderantrieb (5) des zweiten Schenkels (3) entlang der Förderrichtung (F) über den Auslass (A) ausförderbar ist.

2. Kippvorrichtung (1) nach Anspruch 1, **dadurch gekennzeichnet, dass** der erste Förderantrieb (4) und/oder der zweite Förderantrieb (5) als Rollen- und/oder Bandförderer, insbesondere mit einem Modulband, ausgebildet ist.

3. Kippvorrichtung (1) nach Anspruch 1 oder 2, **dadurch gekennzeichnet, dass** der erste Schenkel (2) und der zweite Schenkel (3) an einer gemeinsamen, horizontalen Schwenkachse (12) angeordnet sind.

4. Kippvorrichtung (1) nach einem der Ansprüche 1 bis 3, **dadurch gekennzeichnet, dass** jeder der Schenkel (2, 3) zum Betätigen der Förderantriebe (4, 5) zumindest einen Motor mit einem Getriebe und einem Verbindungsmittel, insbesondere einen Getriebemotor (6, 7) mit Gurtantrieb, angetriebene Rollen und/oder ein Modulband aufweist.

5. Kippvorrichtung (1) nach einem der Ansprüche 1 bis 4, **dadurch gekennzeichnet, dass** die Kippantriebe (8, 9) als Motor mit Getriebe, insbesondere Servomotor mit Kurbelgetriebe, ausgebildet sind.

6. Kippvorrichtung (1) nach einem der Ansprüche 1 bis 5, **dadurch gekennzeichnet, dass** der erste Schenkel (2) und der zweite Schenkel (3) in einem rechten Winkel zueinander anordenbar sind.

7. Fördersystem, insbesondere einer Kommissionieranlage, mit einer Einrichtung zum Ermitteln einer Orientierung eines Paketes (P), insbesondere einer Kamera oder einem Lasersensor, einem Fördereinlass (13) zum Einfördern des Paketes (P) in den Einlass (E) einer Kippvorrichtung (1) nach einem der Ansprüche 1 bis 6, über welche das Paket (P) kippbar ist, und einem Förderauslass (16) zum Ausfördern des Paketes (P) vom Auslass (A) der Kippvorrichtung (1).

8. Verfahren zum Kippen von einem oder mehreren Paketen (P), insbesondere mit einer Kippvorrichtung (1) nach einem der Ansprüche 1 bis 7, insbesondere in einem Fördersystem, bei welchem Fördersystem eine Orientierung des Paketes (P) ermittelt und das Paket (P) über einen Einlass (E) in eine Kippvorrichtung (1) eingefördert wird, **dadurch gekennzeichnet, dass** das Paket (P) zunächst von einem ersten Schenkel (2) der Kippvorrichtung (1) aufgenommen wird, wobei das Paket (P) abhängig von der Orientierung entweder von einem ersten Förderantrieb (4) des ersten Schenkels (2) entlang einer Förderrichtung (F) über einen Auslass (A) ausgefördert oder von der Kippvorrichtung (1) gekippt wird, indem der erste Schenkel (2) und ein zweiter Schenkel (3) der Kippvorrichtung (1) zum Kippen des Paketes (P) um eine Schwenkachse (12) geschwenkt werden, welche bevorzugt im Wesentlichen parallel zur Förderrichtung (F) ist, sodass ein zu orientierendes Paket (P) vom zweiten Schenkel (3) aufgenommen und von einem zweiten Förderantrieb (5) des zweiten Schenkels (3) entlang der Förderrichtung (F) über den Auslass (A) ausgefördert wird.

9. Verfahren nach Anspruch 8, **dadurch gekennzeichnet, dass** das Paket (P) in einer Ausgangsposition vom ersten Schenkel (2) aufgenommen und die beiden Schenkel (2, 3) zum Kippen des Paketes (P) gemeinsam von der Ausgangsposition in eine Endposition geschwenkt werden.

10. Verfahren nach Anspruch 9, **dadurch gekennzeichnet, dass** zunächst der erste Schenkel (2) und anschließend der zweite Schenkel (3) von der Endposition in die Ausgangsposition zurückgeschwenkt wird.

11. Verfahren nach Anspruch 9 oder 10, **dadurch gekennzeichnet, dass** der erste Schenkel (2) noch vor dem Ausfördern des Paketes (P) mit geänderter Orientierung in die Ausgangsposition zurückgeschwenkt wird.

12. Verfahren nach einem der Ansprüche 9 bis 11, **dadurch gekennzeichnet, dass** der zweite Schenkel (3) von der Ausgangsposition in die Endposition um 90° geschwenkt wird.

13. Verfahren nach einem der Ansprüche 9 bis 12, **dadurch gekennzeichnet, dass** der erste Schenkel (2) von der Ausgangsposition in die Endposition um weniger als 90°, aber mehr als 45°, geschwenkt wird.

14. Verfahren nach einem der Ansprüche 9 bis 13, **dadurch gekennzeichnet, dass** das Paket (P) mit geänderter Orientierung in der Endposition vom zweiten Förderantrieb (5) ausgefördert wird.

15. Verfahren nach einem der Ansprüche 8 bis 14, **dadurch gekennzeichnet, dass** der erste Schenkel (2) und der zweite Schenkel (3) unabhängig voneinander um dieselbe Schwenkachse (12) geschwenkt werden.
